# EUROPÄISCHE PATENTSCHRIFT

(11) **EP 4 264 396 B1**
(45) Veröffentlichungstag und Bekanntmachung des Hinweises auf die Patenterteilung: **02.12.2026**
(21) Anmeldenummer: 21835953.7
(22) Anmeldetag: 07.12.2021
(51) Int. Cl.: G05G 1/08, G06F 3/0362, G06F 3/039, G06F 3/044, G06F 3/0354

(54) **DISPLAY MIT EINEM AUF DEM DISPLAY BEFESTIGTEN DREHSTELLER**
DISPLAY WITH A ROTARY CONTROL MOUNTED ON THE DISPLAY
DISPOSITIF D'AFFICHAGE À COMMANDE ROTATIVE MONTÉE SUR LE DISPOSITIF D'AFFICHAGE

(30) Priorität: 15.12.2020 DE 102020215888
(43) Veröffentlichungstag der Anmeldung: 25.10.2023
(73) Patentinhaber: AUMOVIO Germany GmbH, 60488 Frankfurt am Main (DE)
(72) Erfinder: BEILKER, Dirk, 60488 Frankfurt am Main (DE)
(74) Vertreter: Aumovio Corporation
(86) Internationale Anmeldenummer: PCT/DE2021/200251
(87) Internationale Veröffentlichungsnummer: WO 2022/128020

(56) Entgegenhaltungen:
- DE-A1- 102011 114 051
- FR-A1- 3 033 422
- JP-A- 2016 218 542
- US-A1- 2014 042 004
- US-A1- 2018 084 937
- US-A1- 2020 174 585

## Beschreibung

Die vorliegende Erfindung betrifft ein Display mit einem auf dem Display befestigten Drehsteller. Aus dem Stand der Technik sind derartige Displays bekannt, bei denen das Display kapazitive Touchsensoren aufweist. So werden sogenannte Touchscreens realisiert. Bei einzelnen Ausgestaltungen dieser Touchscreens ist die Handhabe des Drehstellers vor dem Touchscreen angeordnet und um eine Achse drehbar gelagert. So können besonders einfach aus einem Wertebereich Werte ausgewählt und /oder verändert werden ist. Bekannte derartige Drehsteller weisen mindestens eine Gegenelektrode auf, die die Touchsensoren des Touchscreens beeinflussen. Durch eine Auswertung der Touchsensoren ist die Drehposition des Drehstellers ermittelbar.

FR 3 033 422 A1 1 betrifft Anzeigen und Anzeigesysteme in einer Mensch-Maschine-Schnittstelle, die einen digitalen Bildschirm und einen darauf befindlichen Drehknopf umfassen. US 2014/042004 A1 bezieht sich allgemein auf eine Drehknopf-Steuervorrichtung und insbesondere auf eine Drehknopf-Steuervorrichtung zur Steuerung eines Touchpanels. JP 2016 218542 A bezieht sich auf ein Bediengerät und ein Bediensystem.

Der Drehknopf des Drehstellers besteht im Stand der Technik in der Regel aus einem leitfähigen Material, welches mit einer oder mehreren Gegenelektroden verbunden ist, die kreis- oder ringförmig direkt über den Touchsensoren angeordnet sind. Die Touchsensoren sind transparent ausgestaltet und entweder direkt auf dem oder innerhalb des Displays (sogenanntes in-Cell-Touch) angeordnet und durch eine Glas- oder Kunststoffoberfläche abgedeckt. So ist beispielsweise ein Aufbau bekannt, bei dem ein ringförmiger Drehsteller mit sehr breiter durchsichtiger Achse mit Lupeneffekt verwendet wird, so dass der Displayinhalt durch die Achse hindurch angeschaut werden kann. Des Weiteren ist ein Aufbau bekannt, bei dem nur eine einzelne kleine Gegenelektrode bei Rotation des Drehstellers über die Glas- oder Kunststoffoberfläche gleitet und lediglich auf die allernächsten Touchsensoren einwirkt.

Bei Verwendung einer oder mehrerer ringförmig angeordneter Gegenelektroden kann bereits eine kleine Veränderung des Abstandes zwischen den Touchsensoren und Gegenelektrode (z.B. durch mechanische Toleranzen oder Verunreinigung) den Positionswert des Drehstellers beeinflussen. Der Einsatz federnder Gegenelektroden, die gleichmäßig auf die Bedienoberfläche drücken, erfordert einen relativ komplexen Aufbau mit vielen Bauteilen, der im vorhandenen Bauraum schwierig um zusetzten und somit teuer ist. Federnde Gegenelektroden schleifen auf der Bedienoberfläche und verursachen Geräusche sowie eine Abnutzung, die den Sensorwert beeinflusst.

Aufgabe der Erfindung ist es daher, einen einfachen, robusten Aufbau mit wenigen Bauteilen, sowie ein Auswerteverfahren anzugeben, das weitgehend von mechanischen Toleranzen unbeeinflusst bleibt.

Diese Aufgabe wird durch ein Display mit einem auf dem Display befestigten Drehsteller mit den Merkmalen des Patentanspruchs 1 und ein Auswerteverfahren nach Patentanspruch 7 gelöst. Vorteilhafte Ausgestaltungen der Erfindung sind den Unteransprüchen zu entnehmen.

Dadurch, dass die Gegenelektrode als Hohlzylinder ausgestaltet ist, wobei die Handhabe eine obere und eine untere Kontur aufweist, wobei die untere Kontur näher zu dem Display angeordnet ist als die obere Kontur, wobei die die unter Kontur als der Hohlzylinder ausgestaltet ist und die Abwicklung der unteren Kontur sinusförmig ist, wird ein einfacher Aufbau erreicht, der zudem unempfindlich gegenüber Bauteiletoleranzen ist.

Erfindungsgemäß entspricht die untere Kontur einem schräg abgeschnittenen Rohr. Dadurch, dass die untere Kontur einem schräg abgeschnittenen Rohr entspricht, lässt sich besonders einfach die Sinusförmige Abwicklung erreichen.

Wenn die Handhabe um einen Zylinder drehbar gelagert ist kann der Aufbau besonders einfach ausgestaltet sein. So kann beispielsweise die Handhabe einen Innendurchmesser aufweisen, der unwesentlich größer ist als der Außendurchmesser des Zylinders. Wenn eine Spielpassung zwischen den beiden Bauelementen ausgewählt wird lässt sich die Handhabe sicher um den Zylinder drehen.

Besonders einfach ist der Aufbau, wenn der Zylinder starr mit der Oberfläche des Displays verbunden ist.

Wenn die Handhabe axial bewegbar ist können zusätzliche Funktionen realisiert werden. So können beispielsweise durch ein Drehen der Handhabe bestimmte Werte, Wertebereich, Funktionen und/oder Geräte angewählt werden und durch eine axiale Verschiebung der Handhabe ausgewählt werden.

Wenn die Handhabe durch ein Federelement in einer axialen Position gehalten ist kann die zuvor beschriebene Auswählfunktion durch ein Drücken in axialer Richtung auf die Handhabe realisiert werden.

Wenn die Drehachse verschiebbar ausgestaltet ist kann die Lage der Handhabe auf dem Display durch einen Bediener der Handhabe zu einem bevorzugten Platz hin verändert werden. So kann beispielsweise die Lage des Zylinders durch einen oberhalb des Displays angeordneten verschiebbaren Träger festgelegt werden.

Dadurch, dass die die Sensorwerte aller Touchsensoren ausgewertet werden, die sich unterhalb der Gegenelektrode befinden und durch diese beeinflusst werden, dass die vektorielle Auswertung dieser Sensorwerte die Drehposition des Drehstellers angibt wird erreicht, dass der Einfluss mechanischer Toleranzen, die durch ein Kippen und /oder eine Abstandveränderung der Handhabe verursacht werden, kompensiert wird.

Erfindungsgemäß wird der Betrag des Summenvektors für die Bestimmung des Abstands des Gegenelektrode von dem Display verwendet. Dadurch, dass der Betrag des Summenvektors für die Bestimmung des Abstands des Gegenelektrode von dem Display verwendet wird, kann mit der Handhabe auch noch einfach eine Eingabefunktion durch eine axiale Veränderung der Lage beispielsweise durch Drücken oder Ziehen der Handhabe erreicht werden.

Die Erfindung wird nachfolgend anhand eines besonders bevorzugten Ausführungsbeispiels erläutert.

Es zeigen:
Figur 1 einen Schnitt durch ein besonders bevorzugtes Display und mit einem auf dem Display befestigten Drehsteller, wobei eine Handhabe des Drehstellers sich nicht in einer Betriebsposition befindet.
Figur 2 die Ansicht auf die Anzeige und den Drehsteller aus Figur 1 in Betriebsposition mit Daumen und Finger eines ansonsten nicht dargestellten Bedieners.
Figur 3 die Aufsicht auf eine Gegenelektrode und Touchsensoren aus Fig. 1 und 2.

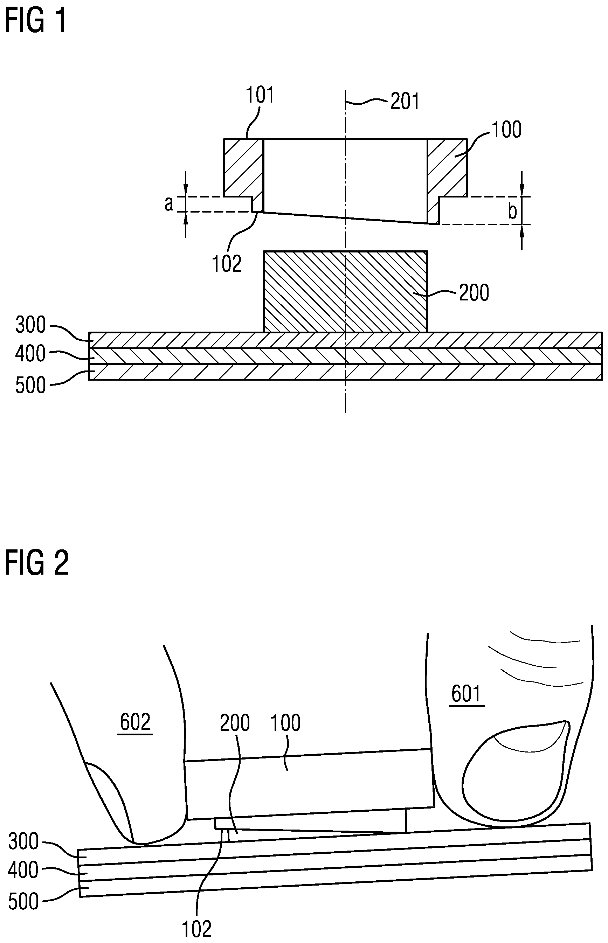

In Figur 1 erkennt man eine Handhabe 100 mit einer oberen Kontur 101 und einer unteren Kontur 102, einen Zylinder 200 mit einer Symmetrieachse 201, eine Bedienoberfläche 300, Touchsensoren 400, ein Display 500 und einen Daumen 601 und einen Finger 602 einer ansonsten nicht dargestellten Bedienperson. Die untere Kontur 102 der Handhabe 100 bildet die Gegenelektrode und ist abgeschrägt. Man erkennt dies daraus, dass der Abstand a kleiner ist als der Abstand b zum ansonsten symmetrisch ausgestalteten Drehsteller 100. So wird eine sinusförmige Abwicklung der unteren Kontur 102 erreicht. Der Drehsteller 100 wird ebenfalls um die Symmetrieachse 201 des Zylinders 200 gedreht. Dies wird im Betriebsfall dadurch erreicht, dass die Handhabe auf den Zylinder 200 zumindest teilweise aufgeschoben ist und so die Drehachse der Handhabe 100 vorgegeben ist. Der Zylinder 200 kann wie dargestellt massiv ausgestaltet sein, kann aber auch hohl ausgestaltet sein. Die Bedienoberfläche 300 schützt die Touchsensoren 400 und das Display 500 und kann aus einem transparenten Kunststoff, Glas oder einem sonstigen transparenten Material ausgestaltet sein. Das Display 500 kann als elektrooptisches Display wie beispielsweise als Flüssigkristalldisplay oder Leuchtdiodendisplay ausgestaltet sein. Die Touchsensoren 400 sind im Ausführungsbeispiel vor dem Display 500 angeordnet, können aber auch innerhalb des Displays 500 zwischen einzelnen Bildpunkten des Displays 500 angeordnet sein.

In Figur 2 erkennt man zusätzlich zu den in Figur 1 beschriebenen Teilen einen Daumen 601 und einen Finger 602 einer ansonsten nicht dargestellten Bedienperson. Die Handhabe 100 ist in einer Bedienposition angeordnet und so auf den Zylinder 200 aufgeschoben. Durch eine nicht dargestellte Sperre wird verhindert, dass die Handhabe 100 völlig von dem Zylinder 200 gleiten kann. Es ist möglich die Sperre so auszugestalten, dass die Handhabe nicht in axialer Richtung bewegt werden kann, es ist aber auch möglich, eine gewisse axiale Verstellbarkeit vorzusehen und so eine zusätzliche Funktionalität des Drehstellers zu ermöglichen. In diesem Fall wird die Handhabe 100 vorteilhafterweise durch ein Federelement in einer bestimmten axialen Position gehalten. Die Handhabe 100 kann beispielsweise von einer ansonsten nicht dargestellten Bedienperson mit ihrem Daumen 601 und Finger 602 bewegt werden. Sofern eine axiale Verstellbarkeit der Handhabe 100 vorgesehen ist, kann die Handhabe auch noch in axialer Richtung gezogen werden.

Weiterhin erkennt man in Figur 2 deutlich, dass die untere Kontur 102 der Handhabe 100 des Drehstellers abgeschrägt ist: auf der linken Seite befindet sich ein Spalt zwischen der unteren Kontur 102 des Drehstellers 100 und der Bedienoberfläche 300, während die untere Kontur 102 auf der rechten Seite auf der Bedienoberfläche 300 aufliegt.

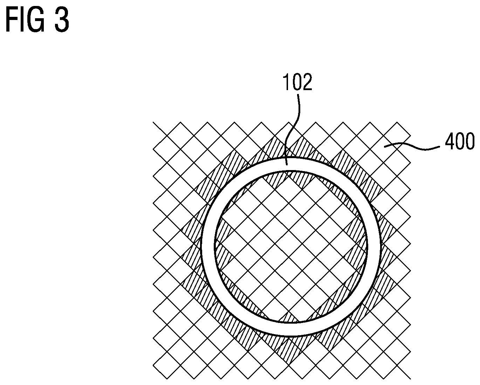

In Figur 3 erkennt man eine Anzahl von Touchsensoren 400 und die untere Kontur 102 des ansonsten nicht dargestellten Drehstellers. Die Touchsensoren 400 sind quadratisch ausgestaltet, können aber auch eine andere Form wie beispielsweise rund oder oval aufweisen. Touchsensoren 400, die sich unterhalb der Gegenelektrode (=untere Kontur 102 der Handhabe) befinden, sind als schwarze Quadrate dargestellt, die sonstigen Touchsensoren 400 sind als weiße Quadrate dargestellt.

### Bezugszeichen

100 Handhabe
101 Obere Kontur der Handhabe
102 Untere Kontur der Handhabe
200 Zylinder
201 Symmetrieachse (des Zylinders)
300 Bedienoberfläche
400 Touchsensor
500 Display
601 Daumen
602 Finger

## Patentansprüche

1. Display (500) mit einem auf dem Display (500) befestigten Drehsteller, wobei das Display (500) Touchsensoren (400) aufweist, wobei die Handhabe (100) des Drehstellers um eine Achse (201) drehbar gelagert ist und mindestens eine Gegenelektrode(102) aufweist und durch eine Auswertung der Touchsensoren (400) die Drehposition der Handhabe (100) des Drehstellers ermittelbar ist, wobei die Gegenelektrode (102) als Hohlzylinder ausgestaltet ist, wobei die Handhabe (100) eine obere und eine untere Kontur (101, 102) aufweist, wobei die untere Kontur (102) näher zu dem Display (500) angeordnet ist als die obere Kontur (101), wobei die untere Kontur (102) als der Hohlzylinder ausgestaltet ist und die Abwicklung der unteren Kontur (102) sinusförmig ist, **dadurch gekennzeichnet, dass** die untere Kontur (102) einem schräg abgeschnittenen Rohr entspricht.

2. Display nach Patentanspruch 1, **dadurch gekennzeichnet, dass** die Handhabe (100) um einen Zylinder (200) drehbar gelagert ist.

3. Display nach Patentanspruch 2, **dadurch gekennzeichnet, dass** der Zylinder (200) starr mit der Bedienoberfläche (300) des Displays (500) verbunden ist.

4. Display nach einem der vorstehenden Ansprüche, **dadurch gekennzeichnet, dass** die Handhabe (100) axial bewegbar ist.

5. Display nach Patentanspruch 4, **dadurch gekennzeichnet, dass** die Handhabe (100) durch ein Federelement in einer axialen Position gehalten ist.

6. Display nach einem der vorstehenden Patentansprüche, **dadurch gekennzeichnet, dass** die Drehachse (201) verschiebbar ausgestaltet ist.

7. Verfahren zur Auswertung der Position des Drehstellers eines Displays nach einem oder mehreren der vorstehenden Patentansprüche, wobei die Sensorwerte aller Touchsensoren (400) ausgewertet werden, die sich unterhalb der Gegenelektrode (102) befinden und durch diese beeinflusst werden,
wobei die vektorielle Auswertung dieser Sensorwerte die Drehposition des Drehstellers (100) angibt, **dadurch gekennzeichnet, dass** der Betrag des Summenvektors für die Bestimmung des Abstands des Gegenelektrode (102) von dem Display (500) verwendet wird.

## Claims

1. A display (500) with a rotary control mounted on the display (500), wherein the display (500) has touch sensors (400), wherein the handle (100) of the rotary control is mounted to be rotatable around an axis (201) and has at least one counter electrode (102) and the rotational position of the handle (100) of the rotary control is determinable by an evaluation of the touch sensors (400), wherein the counter electrode (102) is formed as a hollow cylinder, wherein the handle (100) has an upper and a lower contour (101, 102), wherein the lower contour (102) is arranged closer to the display (500) than the upper contour (101), wherein the lower contour (102) is designed as the hollow cylinder and the development of the lower contour (102) is sinusoidal, **characterized in that** the lower contour (102) corresponds to a tube that is cut off obliquely.

2. The display according to claim 1, **characterized in that** the handle (100) is mounted to be rotatable around a cylinder (200).

3. The display according to claim 2, **characterized in that** the cylinder (200) is rigidly connected to the operating surface (300) of the display (500).

4. The display according to any one of the preceding claims, **characterized in that** the handle (100) is axially movable.

5. The display according to claim 4, **characterized in that** the handle (100) is held in an axial position by a spring element.

6. The display according to any one of the preceding claims, **characterized in that** the axis of rotation (201) is designed to be displaceable.

7. A method for evaluating the position of the rotary control of a display according to one or more of the preceding claims, wherein the sensor values of all of the touch sensors (400) which are located below the counter electrode (102) and are influenced by the latter are evaluated, wherein the vectorial evaluation of these sensor values indicates the rotational position of the rotary control (100), **characterized in that** the magnitude of the sum vector is used for determining the distance of the counter electrode (102) from the display (500).

## Revendications

1. Écran (500) comportant un dispositif de commande rotatif fixé sur l'écran (500), dans lequel l'écran (500) présente des capteurs tactiles (400), dans lequel la poignée (100) du dispositif de commande rotatif est montée de manière rotative autour d'un axe (201) et présente au moins une contre-électrode (102), et la position de rotation de la poignée (100) du dispositif de commande rotatif peut être déterminée par une analyse des capteurs tactiles (400), dans lequel la contre-électrode (102) est conçue comme un cylindre creux, dans lequel la poignée (100) présente un contour supérieur et un contour inférieur (101, 102), dans lequel le contour inférieur (102) est disposé plus près de l'écran (500) que le contour supérieur (101), dans lequel le contour inférieur (102) est conçu comme un cylindre creux et le développement du contour inférieur (102) est sinusoïdal, **caractérisé en ce que** le contour inférieur (102) correspond à un tube tronqué en biais.

2. Écran selon la revendication 1, **caractérisé en ce que** la poignée (100) est montée de manière rotative autour d'un cylindre (200).

3. Écran selon la revendication 2, **caractérisé en ce que** le cylindre (200) est relié de manière rigide à la surface de commande (300) de l'écran (500).

4. Écran selon l'une des revendications précédentes, **caractérisé en ce que** la poignée (100) est mobile axialement.

5. Écran selon la revendication 4, **caractérisé en ce que** la poignée (100) est maintenue dans une position axiale par un élément élastique.

6. Écran selon l'une des revendications précédentes, **caractérisé en ce que** l'axe de rotation (201) est conçu pour être coulissant.

7. Procédé d'évaluation de la position du dispositif de commande rotatif d'un écran selon l'une ou plusieurs des revendications précédentes, dans lequel les valeurs des capteurs de tous les capteurs tactiles (400) situés en dessous et influencés par la contre-électrode (102) sont évaluées, dans lequel l'évaluation vectorielle de ces valeurs de capteur indique la position de rotation du dispositif de commande rotatif (100), **caractérisé en ce que** la magnitude du vecteur somme est utilisée pour déterminer la distance de la contre-électrode (102) par rapport à l'écran (500).
